# FASCICULE DE BREVET EUROPEEN

(11) **EP 2 591 391 B1**
(45) Date de publication et mention de la délivrance du brevet: **06.09.2017**
(21) Numéro de dépôt: 11734055.4
(22) Date de dépôt: 08.07.2011
(51) Int. Cl.: G02C 5/04, G02C 5/06

(54) **MONTURE DE LUNETTES A DIEDRE REGLABLE**
BRILLENGESTELL MIT EINSTELLBAREM ZWEIFLÄCHIGEM WINKEL
SPECTACLES FRAME WITH ADJUSTABLE DIEDRE

(30) Priorité: 09.07.2010 FR 1002905
(43) Date de publication de la demande: 15.05.2013
(73) Titulaire: Chêne, Richard, 92200 Neuilly (FR); Miklitarian, Alain, 75014 Paris (FR); Delamour, Dominique, 78490 Les Mesnuls (FR)
(72) Inventeur: Chêne, Richard, 92200 Neuilly (FR); Miklitarian, Alain, 75014 Paris (FR); Delamour, Dominique, 78490 Les Mesnuls (FR)
(74) Mandataire: Office Kirkpatrick
(86) Numéro de dépôt international: PCT/EP2011/061700
(87) Numéro de publication internationale: WO 2012/004404

(56) Documents cités:
- EP-A1- 0 516 883
- FR-A1- 2 670 587
- US-A- 1 609 477
- US-A- 1 789 937
- US-A- 2 519 852
- US-A- 5 689 835
- US-A1- 2009 219 479

## Description

Le domaine de l'invention est celui des montures de lunettes.

Une monture de lunettes comporte une face avant et deux branches articulées sur la face avant, des deux côtés de la face.

Une face avant comporte deux supports de verre réunis par un pont, ou un nez. Souvent, les supports de verre sont des joncs refermés sur eux-mêmes et leur agencement détermine en partie l'écartement des centres optiques des verres.

Si on considère que les joncs supports s'étendent sensiblement dans des plans, s'ils ne sont pas confondus, ces plans forment un dièdre, dont l'arête s'étend sensiblerment à travers le nez de la monture.

Une bonne monture de lunettes est une monture qui chausse bien celui qui la porte, qui est bien adaptée à sa tête, avec un bon écartement temporal, pour que, le nez de la monture étant bien appliqué sur le nez de l'individu, les branches encadrent bien sa tête et reposent correctement sur ses oreilles.

Le choix d'une monture implique donc de choisir une monture avec un bon dièdre et force est de constater que trouver une monture adaptée à sa tête n'est jamais très facile.

C'est dans ces circonstances que les demandeurs proposent leur invention qui est une
monture de lunettes comportant une face avant et deux branches, la face avant comportant deux supports de verre réunis par un nez et formant un dièdre, caractérisé par le fait que le nez comporte des moyens agencés pour faire varier et régler le dièdre.

Grâce à l'invention, on peut donc disposer d'une monture adaptable à tout le monde. C'est une monture universelle. L'intérêt pour les professionnels, fabricants et opticiens, est évident. Il est également évident pour les jeunes qui grandissent et dont la tête évolue au cours de la croissance.

Dans la forme de réalisation préférée de la monture de l'invention, le nez comporte des moyens ressorts agencés pour ouvrir le dièdre contre l'action de moyens antagonistes agencés pour régler l'ouverture du dièdre.

Avantageusement, le nez comporte un pont ressort refermé sur une cale antagoniste de réglage de dièdre.

Il suffit alors de changer de cale pour changer de réglage.

Il va de soi que la monture de l'invention est une monture rigide dont l'écartement des centres optiques des verres ne peut plus varier après réglage du dièdre.

L'invention sera mieux comprise à l'aide de la description suivante d'une forme de réalisation préférée, en référence au dessin en annexe, sur lequel
- la figure 1 est une vue en perspective de l'intérieur d'une partie de la monture équipée de verres ;
- la figure 2 est une vue de dessus d'une partie de la monture de la figure 1 et
- la figure 3 est une vue de dessus schématique qui illustre l'incidence de l'ouverture du dièdre d'une monture sur l'écartement des centres optiques.

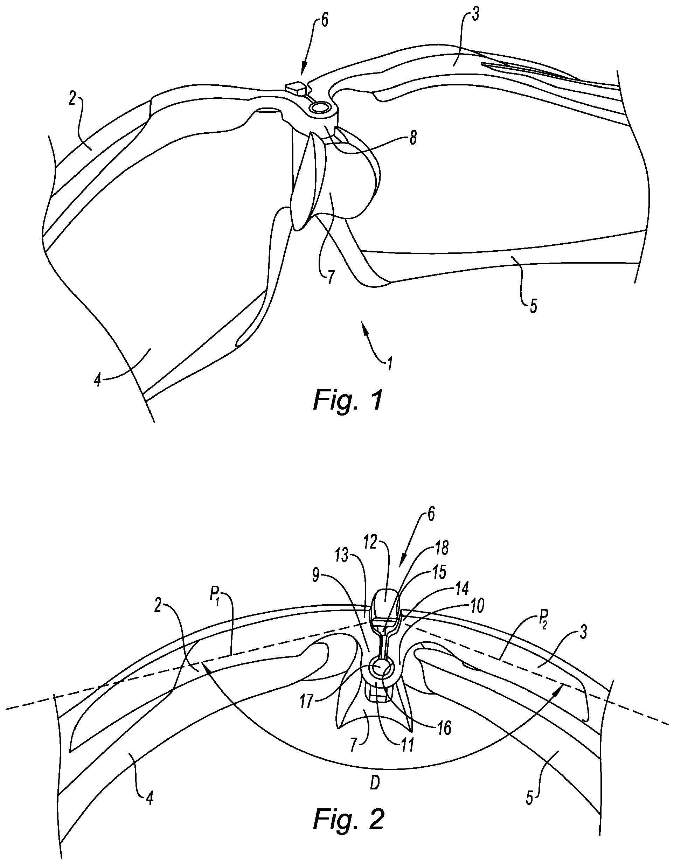

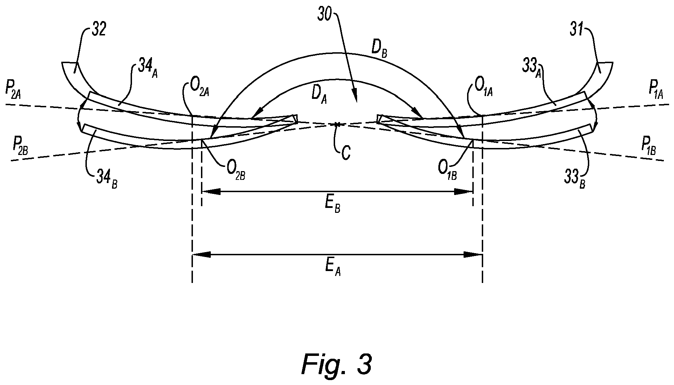

La monture représentée sur les figures 1 et 2, et qui est en fait un prototype, comporte une face avant 1 et deux branches articulées sur cette face avant, qu'on ne voit pas, mais similaires à celles qu'on aperçoit en partie sur la figure 3 qui représente, dans deux états différents,une face avant de monture 30, avec deux branches 31, 32 articulées sur cette face avant.

La face avant 1 comporte deux supports de verre 2, 3, ici d'une seule pièce et dans le prolongement l'un de l'autre, sur lesquels sont montés deux verres 4, 5.

Bien qu'il s'agisse d'une face avant d'une seule pièce, les deux supports, ici des joncs 2, 3, sont réunis l'un à l'autre dans une zone centrale qu'on appelle pont ou nez 6. Au pont 6 est fixé un coussinet 7 conformé pour servir d'appui au nez de l'individu qui chaussera la monture.

Comme on le voit mieux sur la figure 2, les deux supports 2, 3, certes courbes, forment grossièrement un dièdre D ménagé entre les deux plans P₁, P₂ dans lesquels s'étendent aussi grossièrement les deux supports.

Ce dièdre D peut varier et être réglé par les moyens du pont 6. Les deux supports 2, 3 sont réunis par une portion de jonc 8 recourbée sur elle-même en U pour présenter deux branches de pont 9, 10 qui, grâce à la partie transversale 11 du pont et à son matériau, ont tendance à se rapprocher l'une de l'autre jusque dans un état de repos dans lequel elles sont en appui l'une sur l'autre.

La portion de jonc 8 forme ainsi un ressort tendant à ouvrir le dièdre D. L'action d'ouverture du dièdre de la portion de jonc 8 peut-être contrée par une cale anatgoniste 12 qu'on vient loger entre les deux extrémités 13, 14 des branches de pont 9, 10 qui se prolongent respectivement par les deux joncs supports 2, 3, extrémités 13, 14 échancrées à cet effet pour former un logement 15 pour la cale 12 sur laquelle est ainsi refermé le jonc ressort 8.

Les deux branches de pont 9, 10 et la partie transversale 11 du pont 6 sont également conformées pour former un petit logement cylindrique 16 destiné à recevoir un pion 17 de retenue de la cale 12 reliée à lui par une fine plaquette 18 glissée entre les deux branches de pont 9, 10. La plaquette 18 est presque une membrane.

A la place de la cale de réglage 12, on pourrait imaginer, un petit ressort de compression défini en fonction de la force du jonc ressort 8 et de l'angle d'ouverture D voulu par le dièdre. D'autres moyens de variation et règlage du dièdre pourraient êtrre encore proposés.

En référence à la figure 3, la face avant comporte deux supports de verre 33, 34 dans deux états d'ouverture de dièdre différents A et B. Un dièdre d'ouverture D est ménagé entre deux plans P₁ P₂ passant par le point central C du pont de la monture et les centres optiques O₁, O₂ des verres supportés par les supports, respectivement.

Dans l'état A, le dièdre D_{A} définit un écartement E_{A} des centres optiques O_{1A} O_{2A}. Le dièdre D_{A} est inférieur à 180°. Dans l'état B, le dièdre D_{B} définit un écartement E_{B} des centre optiques O_{1B} et O_{2B}. le dièdre D_{B} est supérieur à 180°. E_{B} est inférieur à E_{A}. On conçoit facilement que plus on referme le dièdre D_{A}, plus l'écartement E_{A} diminue, plus on l'ouvre, plus l'écartement augmente, mais jusqu'à ce que le dièdre devienne égal à 180°, angle au-delà duquel l'écartement E_{B} rediminue.

## Revendications

1. Monture de lunettes comportant une face avant (1) et deux branches (31, 32), la face avant (1) comportant deux supports de verre (2, 3) réunis par un nez (6) et formant un dièdre (D), **caractérisée par le fait que** le nez (6) comporte des moyens (8-12), agencés pour faire varier et régler le dièdre (D) et des moyens ressorts (8), agencés pour ouvrir le dièdre (D) contre l'action de moyens antagonistes (12) agencés pour régler l'ouverture du dièdre (D).

2. Monture selon la revendication 1, dans laquelle le nez (6) comporte un pont ressort (8) refermé sur une cale antagoniste (12) de réglage de dièdre (D).

3. Monture selon la revendication 2, dans lesquelles le nez (6) comporte un jonc ressort (8) recourbé sur lui-même en U, avec deux branches de pont (9, 10) et une partie transversale (1 1) conformées pour former un logement (15) pour la cale (12) et un logement (16) pour un pion (17) de retenue de la cale (15) reliés l'un à l'autre.

## Patentansprüche

1. Brillengestell, umfassend eine Vorderseite (1) und zwei Bügel (31, 32), wobei die Vorderseite (1) zwei Brillenträger (2, 3) umfasst, die über einen Nasensteg (6) verbunden sind und einen Dieder (D) bilden, **dadurch gekennzeichnet, dass** der Nasensteg (6) Mittel (8 bis 12), die angeordnet sind, um den Dieder (D) zu variieren und einzustellen, und Federmittel (8), die angeordnet sind, um den Dieder (D) gegen die Wirkung von gegenwirkenden Mitteln (12), die angeordnet sind, um die Öffnung des Dieders (D) einzustellen, zu öffnen, umfasst.

2. Gestell nach Anspruch 1, wobei der Nasensteg (6) eine Federbrücke (8) umfasst, die auf einer gegenwirkenden Einlage (12) zum Einstellen des Dieders (D) geschlossen ist.

3. Gestell nach Anspruch 2, wobei der Nasensteg (6) einen Federsprengring (8) umfasst, der in sich U-förmig gebogen ist, mit zwei Brückenschenkeln (9, 10) und einem Querteil (11), die ausgestaltet sind, um eine Aufnahme (15) für die Einlage (12) und eine Aufnahme (16) für einen Stift (17) zum Halten der Einlage (15), die miteinander verbunden sind, zu bilden.

## Claims

1. A spectacle frame comprising a front face (1) and two branches (31, 32), the front face (1) comprising two glass supports (2, 3) joined by a nose (6) and forming a dihedron (D), **characterized in that** the nose (6) comprises means (8-12), arranged to vary and adjust the dihedron (D) and spring means (8), arranged to open the dihedron (D) against the action of opposing means (12) arranged to adjust the opening of the dihedron (D).

2. The frame according to claim 1, wherein the nose (6) comprises a spring bridge (8) closed on an opposing wedge (12) for adjusting the dihedron (D).

3. The frame according to claim 2, wherein the nose (6) comprises a spring ring (8) curved on itself in a U-shape with two bridge branches (9, 10) and a transverse portion (11) shaped to form a housing (15) for the wedge (12) and a housing (16) for a pin (17) for retaining the wedge (15) connected to one another.
